# NEUE EUROPÄISCHE PATENTSCHRIFT

(11) **EP 0 497 160 B2**
(45) Veröffentlichungstag und Bekanntmachung des Hinweises auf die Entscheidung über den Einspruch: **07.05.2003**
(45) Hinweis auf die Patenterteilung: 09.10.1996
(21) Anmeldenummer: 92100719.1
(22) Anmeldetag: 17.01.1992
(51) Int. Cl.: H01G 4/18, C08L 23/12, H01B 3/44, C08J 5/18, B29C 55/00

(54) **Biaxial gestreckte Polypropylenmonofolie**
Biaxially oriented polypropylene monolayer film
Film monocouche de polypropylène orienté biaxiallement

(30) Priorität: 22.01.1991 DE 4101650
(43) Veröffentlichungstag der Anmeldung: 05.08.1992
(73) Patentinhaber: Trespaphan GmbH, 66539 Neunkirchen (DE)
(72) Erfinder: Schmidt, Robert, Dr. Dipl.-Ing., W-6229 Walluf 1 (DE); Koch, Gerhard, W-6676 Mandelbachtal (DE); Eiden, Peter, Dipl.-Ing., W-6650 Homburg (DE); Müller, Karl-Heinz, W-6685 Schiffweiler (DE)
(74) Vertreter: Luderschmidt, Schüler & Partner GbR

(56) Entgegenhaltungen:
- DE-A- 2 722 087
- DE-A- 3 231 013
- DE-A- 3 620 219

## Beschreibung

Die Erfindung betrifft ein Verfahren zur Herstellung einer biaxial gestreckten Polypropylenmonofolie aus reinem Polypropylen, mit einem Aschengehalt < 50 ppm, bei der die Oberflächen der beiden Seiten der Polypropylenmonofolie unterschiedliche Rauhtiefen aufweisen, eine nach diesem Verfahren herstellbare Polypropylenmonofolie sowie die Verwendung dieser Polypropylenmonofolie.

Derartige Polypropylenmonofolien haben Oberflächen gleicher bzw. vergleichbarer Rauhheit.

Beim Einsatz solcher Folien als Elektroisolierfolien muß eine Vielzahl elektrischer, mechanischer und Oberflächeneigenschaften erfüllt werden. Bei den elektrischen Eigenschaften sind beispielsweise ein geringer dielektrischer Verlustfaktor (= tanδ), ein hoher elektrischer Durchgangswiderstand, hohe Gleich- und Wechselspannugsfestigkeit sowie eine möglichst kleine Zahl von Fehlstellen anzustreben.

Ein Verfahren der eingangs beschriebenen Art ist aus der DE-A-36 20 219 bekannt. Bei diesem Verfahren wird Polypropylen in einem Extruder aufgeschmolzen und über eine Breitschlitzdüse auf die Oberfläche einer Abzugswalze extrudiert. Die auf der Oberfläche der Abzugswalze zu einer Vorfolie abgekühlte Kunststoffschmelze wird im Bereich der Abzugswalze in einer Zone temperaturbehandelt und anschließend in bekannter Weise biaxial gestreckt und thermofixiert. Bei einer Temperatur der Abzugswalze zwischen 10 °C und 100 °C wird die luftseitige Folienoberfläche, die nicht mit der Umfangsfläche der Abzugswalze in Kontakt steht, mit Blasluft von einer Temperatur zwischen 30 °C und ≤ 20 ° angeblasen, wobei die Zeitdauer für diese Temperaturbehandlung mindestens 1,5 Sekunden beträgt. Die rauhere Oberfläche der so erhaltenen biaxial gestreckten Folie besitzt eine gemittelte Rauhtiefe R_{z} < 0,27 µm.

In der DE-A-32 31 013 ist ein Verfahren zur Herstellung eines Polypropylenfilms mit ausstrukturierter Oberfläche beschrieben, bei dem zuerst eine Oberfläche des Films einer Elektronenbestrahlung ausgesetzt und dann der Film biaxial permanent gereckt wird, so daß statistische Unregelmäßigkeiten auf der bestrahlten Filmoberfläche auftreten.

Die Forderung nach einer glatten Folienseite resultiert aus dem Wunsch, eine möglichst fehlerfreie Metallisierung zu erzielen, die eine hohe Lebensdauer eines aus der metallisierten Folie hergestellten Kondensators sichert.

Diese wesentliche Produkteigenschaft von Kondensatoren aus metallisierten Polypropylenfolien, insbesondere bei einer Al-Metallisierung, wird bestimmt, indem unter bestimmten Belastungen (Höhe der angelegten Wechselspannung, Frequenz) der Kapazitätsverlust über eine Zeitspanne von etwa 1000 bis 2000 Stunden gemessen wird. Eine hohe Lebensdauer bedeutet dabei einen geringen Kapazitätsverlust. Der Kapazitätsverlust resultiert aus Oxidationsvorgängen an der aufgedampften Metallschicht. Durch diese Oxidationsvorgänge bildet sich bei aluminiumbedampften Folien das nichtleitfähige Aluminiumoxid Al₂O₃. Diese oxidierten, nichtleitfähigen Flächen der Aluminiumschicht wachsen mit der Zeit und reduzieren die aktive Kondensatorfläche und damit die Kapazität des Kondensators. Die für die Korrosion verantwortlichen Mechanismen sind elektrochemischer Natur. So ist in der Literaturstelle "On the mechanism of aluminum corrosion in metallized film AC capacitors", IEEE Transactions On Electrical Insulation, volume E1-19, No. 4, August 1984, Verfasser D. F. Taylor, beschrieben, daß die vollständige Entfernung von Feuchtigkeit die Korrosion sum Stillstand bringt, was jedoch in der Praxis unmöglich ist. Andererseits steigt die Korrosion mit der Temperatur, der angelegten Wechselspannung und der Frequenz an. Ein Gleichstromfeld, das äquivalent mit dem Scheitelwert des Wechselstromfeldes ist, kann den Korrosionsvorgang weder auslösen noch unterstützen. Diese Beobachtungen sind konsistent mit dem Mechanismus der anodischen Oxidation an der Kante von Fehlstellen in Aluminiumbeschichtungen von metallisierten Elektroisolierfolien. Diese Diskontinuitäten in der Aluminiumschicht müssen ausreichend groß sein, um das lokale elektrische Feld zu verstärken und den lonentransport in die Oxidstelle aufrechtzuerhalten. Fibrillen bzw. Krater auf der Polymeroberfläche und sowohl elektrische als auch elektrochemische Selbstheilungsprozesse sind die wahrscheinlichsten Korrosionsquellen, die Defekte in der Metallbeschichtung auslösen. Der Kapazitätsverlust steigt bekannterweise mit der Rauheit der Oberfläche der zu metallisierenden Folienseite an.

Ein weithin bekanntes Problem bei der Weiterverarbeitung von Polypropylenfolien mit sehr glatten Oberflächen besteht darin, daß die Folien beim Schneiden und Wickeln zum Blocken neigen. Insbesondere bei der Weiterverarbeitung auf schnellaufenden Kondensatorwickelmaschinen können solche Folien mit beidseitig glatten Oberflächen nicht eingesetzt werden. Aus diesem Grund wird von Polypropylen-Elektroisolierfolien verlangt, daß sie auf einer Seite eine hinreichende Rauheit aufweisen, die sicherstellt, daß zwischen zwei aufeinanderliegenden Lagen eines Folienwickels noch genügend Luft vorhanden ist, die ein Blocken der Folie verhindert und somit eine gute Verarbeitbarkeit gewährleistet ist.

Aus der DE-OS 28 51 557 ist eine biaxial gestreckte Polypropylenverbundfolie bekannt, die aus zwei Schichten bzw. Lagen unterschiedlicher Zusammensetzung besteht, und eine Oberfläche mit einer Rauhtiefe R_{z} von höchstens 0,15 µm aufweist, während die andere Oberfläche des Folienverbundes einen R_{z}-Wert zwischen 0,2 µm und 0,4 µm aufweist. Der E-Modul dieser Verbundfolie in allen Richtungen der Folienebene ist größer als 2000 N/mm². Der Folienverbund besitzt eine Gleichspannungsfestigkeit von 690 V/µm.

Ein derartiger Folienverbund wird als Elektroisolierfolie für die Herstellung von MKP-Kondensatoren verwendet, wobei eine gewisse Rauheit der einen Seite aus Verarbeitungsgründen zwingend erforderlich ist, während die andere Seite des Folienverbundes glatt ist. Zur Erzielung der unterschiedlichen Rauheit besteht die Schicht bzw. Lage der glatten Seite des Folienverbundes aus reinem Polypropylen und die andere, rauhe Seite aus einem Polymergemisch bzw. einem Blockcopolymer. Ein solcher Folienverbund zeigt einen geringen Kapazitätsverlust. Neben erhöhten Rohstoff- und Herstellungskosten, bedingt durch die Schmelzebeschichtung oder Koextrusion der beiden Schichtlagen tritt bei diesem bekannten Folienverbund das technologische Problem auf, daß es beim Weiterverarbeiten des Folienverbundes zu einer teilweisen Metallablösung kommen kann.

In der DE-OS 27 40 237 ist ein Herstellungsverfahren für eine Polypropylenfolie mit rauhen Oberflächen beschrieben, bei der die Rauhigkeit durch Einstellung bestimmter Kristallisationstemperaturen und Abkühlungszeitspannen nach Wunsch eingestellt wird. Aus der DE-OS 25 53 693 ist ein Verfahren zur Herstellung von rauhen Polypropylenfolien bekannt, bei dem durch bestimmte Strecktemperaturen und -verhältnisse eine fibrillenartige Netzstruktur auf der Oberfläche erzielt wird. Diese Netzwerkstruktur sichert eine bessere Aufsaugung der bei der Herstellung von Kondensatoren verwendeten Isolieröle.

Ein ähnliches Verfahren zur Herstellung von rauhen Elektroisolierfolien ist aus der DE-OS 27 22 087 bekannt. Hierbei werden durch spezielle Streckbedingungen und -temperaturen in der Oberfläche Kristalle der β-Form mit einem mittleren Durchmesser von mehr als 7 µm erzeugt, mit einer Verteilungsdichte der Kristalle größer als 5000 g/cm² bei Sphärolithen bzw. größer als 1000 g/cm² bei stabförmigen Kristallen. In der DE-OS 26 01 810 ist eine bestimmte Temperaturführung zum Aufrauhen von Schlauchfolien beschrieben, wobei Sphärolithen des γ-Typs erzeugt werden.

Den bekannten Verfahren haftet wegen der steilen Charakteristik der Kristallisationskinetik der Mangel an, daß das Einhalten ganz spezieller Verfahrensbedingungen technisch recht aufwendig und durch äußere Einflüsse, wie z.B. Luftkonvektion, sehr störanfällig ist. Die dabei erhaltenen Folien sind in erster Linie auf die Saugwirkung für Isolieröle, die bei der Kondensatorherstellung eingesetzt werden, ausgelegt, jedoch weniger auf die elektrischen Eigenschaften als Elektroisolierfolien.

Es ist bekannt, daß die elektrischen Eigenschaften von biaxial gestreckten Polypropylenfolien stark von deren Oberflächenstruktur abhängen. Die idealen elektrischen Eigenschaften werden einerseits bei Polypropylenfolien mit sehr glatten und planparallelen Oberflächen beobachtet, wobei andererseits jedoch das voranstehend geschilderte Problem des Blockens der Folie bei der Weiterverarbeitung auftritt. Die guten elektrischen Eigenschaften von Polypropylenfolien nehmer mit ansteigender Rauhigkeit der Oberfläche ab. Vor allem der sogenannte Lebensdauertest, bei dem der Kapazitätsverlust eines Kondensators als Funktion der Zeit gemessen wird, zeigte eine eindeutige Abhängikeit von der Oberflächenrauhigkeit.

Bei der Bedampfung der Polypropylenfolien mit rauher Oberfläche ergibt sich eine inkonstante Schichtdicke, da an den Flanken einer Fibrille bzw. einer Erhebung die Metallschicht dünner als an den Flachstellen der Folie ist.

Es stellt sich somit die Aufgabe, ein Verfahren zur Herstellung einer biaxial gestreckten Polypropylenmonofolie sowie eine derartige Polypropylenmonofolie in Gestalt einer Elektroisolierfolie zur Herstellung von Kondensatoren zu schaffen, die einerseits bei der Weiterverarbeitung nicht blockt und andererseits wenig korrosionsanfällig ist und somit nur geringe Kapazitätsverluste aufweist.

Diese Aufgabe wird erfindungsgemäß dadurch gelöst, daß eine Vorfolie der Polypropylenmonofolie nach dem Extrudieren und Abkühlen eine Vorheizzone durchläuft, in der die Erwärmungstemperatur auf beiden Seiten der Folie unterhalb der Temperatur gehalten wird, bei der eine Umwandlung von β-Sphärolithe in α-Sphärolithe erfolgt, daß am Beginn einer Längsstreckzone die Eingangswalze der Längsstreckzone eine Temperatur von ≥ 150°C aufweist, so daß die Oberfläche der anliegenden Seite der Vorfolie auf eine Tempertur aufgeheizt wird, bei der die β-Sphärolithe aufgeschmolzen und in α-Sphärolithe umgewandelt werden, und daß in einer nachfolgenden Querstreckzone die Temperatur zwischen 150 °C und 165 °C beträgt.

Die weitere Ausgestaltung des erfindungsgemäßen Verfahrens ergibt sich aus den Verfahrensmaßnahmen der Ansprüche 2 bis 3. Die nach dem Verfahren herstellbare biaxial gestreckte Polypropylenmonofolie aus reinem Polypropylen, mit einem Aschegehalt < 50 ppm, bei der die Oberfläche der beiden Seiten der Polypropylenmonofolie unterschiedliche Rauhtielen aufweisen, zeichnet sich dadurch aus, daß die gemitteite Rauhtiefe R_{z} der glatteren Oberfläche, die fibrillenfrei und kraterlos ist, ≤ 0,25 µm ist, daß die gemittelte Rauhtiefe R_{z} der rauheren Oberfläche mindestens 0,02 µm höher liegt, und daß die Bestimmung der Rauhtiefen jeweils bei einem Grenzwert (cut-off-Wert) von 0,08 mm für die Rauhigkeitsmessung erfolgt.

Die weitere Ausgestaltung der Polypropylenmonofolie sowie ihre Verwendung für die Herstellung von Kondensatoren ergibt sich aus den Merkmalen der Patentansprüche 5 bis 11.

Die Erfindung wird im folgenden anhand der Zeichnungen näher erläutert, Es zeigen:
- Figur 1: eine Schnittansicht durch eine Monofolie nach der Erfindung mit glatter und rauher Oberfläche,
- Figur 2: eine Draufsicht auf die zu metallisierende, glatte Oberfläche einer Monofolie nach der Erfindung, und
- Figur 3: eine Draufsicht auf eine zu metallisierende Oberfläche einer Monofolie, die als Vergleichsbeispiel zu der Monofolie nach der Erfindung gemäß Figur 2 dient.

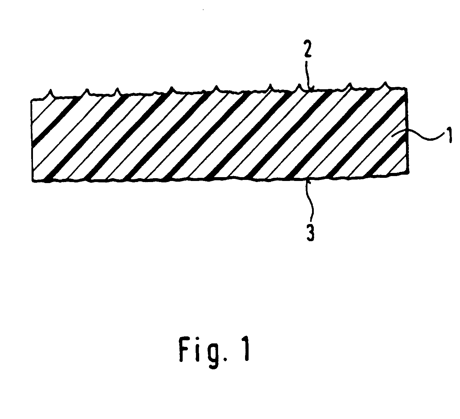

Die Schnittdarstellung nach Figur 1 zeigt eine Monofolie 1 mit den beiden Oberflächen 2 und 3, die unterschiedliche Rauhigkeiten besitzen. Die Oberfläche 2 ist deutlich rauher als die Oberfläche 3. Die Ausgestaltung der Oberflächen wird durch die Vorbehandlung der Vorfolie erreicht, die durch biaxiales Strecken zu der Endfolie geformt wird. Vor der eigentlichen Längsstrekkung durchläuft die extrudierte Vorfolie eine Luftheizzone, in der eine schonende Erwärmung, unter Vermeidung von Überhitzung, der beiden Seiten der Vorfolie vorgenommen wird. Durch die langsame Abkühlung des Schmelzefilms, der etwa mit einer Temperatur von 230 °C aus einer Breitschlitzdüse austritt und unmittelbar auf eine Abkühlwalse geführt ist, die eine Temperatur von etwa 90 °C hat, bilden sich in der Vorfolie zwei Phasen der Kristallstruktur aus, nämlich eine Phase mit α-Sphärolithen und eine Phase mit β-Sphärolithen. Beim Durchlaufen der Vorheizzone wird die Temperatur der Vorfolie in einem Bereich von 125 °C bis etwa 141 °C, d.h. knapp unterhalb der Temperatur, bei der eine Umwandlung der β- in α-Sphärolithe stattfindet, gehalten. Die Verweilzeit der Vorfolie in der Vorheizzone beträgt zwischen 2 und 20 Sekunden. Danach gelangt die Vorfolie in die Streckzonen, in denen sie biaxial verstreckt wird. Die Eingangswalze der Längsstreckzone weist eine Temperatur ≧ 150 °C auf, so daß in der Oberfläche der anliegenden Seite der Vorfolie die β-Sphärolithen eine Phasenumwandlung durchlaufen und in α-Sphärolithen übergehen, während die entgegengesetzte Oberfläche der Vorfolie, die nicht in Kontakt mit der Eingangswalze der Längsstreckzone sich befindet, weiterhin die Kristallstruktur aus β-Sphärolithen beibehält. Die Querstreckung wird im üblichen Temperaturbereich zwischen 150 und 165 °C durchgeführt. Die glattere Oberfläche hat eine gemittette Rauhtiefe R_{z} kleiner/gleich 0,25 µm, während die rauhere Oberfläche eine gemittelte Rauhtiefe R_{z} hat, die mindestens um 0,02 µm höher ist. Bei den Rauhigkeitsmessungen wird der Grenzwert bzw. der cut-off-Wert der Messung auf 0,08 mm eingestellt.

Das Material der Monofolie ist hochreines sauberes Polypropylen, dessen Aschegehalt kleiner als 50 ppm ist. Die für die Herstellung der Folien verwendeten Polypropylene sind frei von anorganischen oder organischen Gleitmitteln und enthalten keine ionogenen Bestandteile. Als Polypropylen wird bevorzugt ein Homopolymer des Propylen verwendet. Die Monofolie enthält das Homopolymer im allgemeinen als das einzige Polymer in der Monofolie, die mit Ausnahme von später beschriebenen Stabilisatoren vorzugsweise keine weiteren Additive aufweist. Die Folie kann aber auch Zusätze, wie z.B. Poly-4-methylpenten-1 mit einem Anteil bis zu 10 Gew.% enthalten.

Die Dicke der Polypropylenmonofolie liegt im Bereich von 3 bis 20 µm, bevorzugt ist vor allem eine Folie im Dickenhereich von 4 bis 15 µm.

Die gemittelte Rauhtiefe R_{z} ist das arithmetische Mittel aus 5 Einzelmessungen der Rauhtiefe R_{z}, wobei R_{z} den Wert zwischen dem Maximum und dem Minimum der Rauhigkeit innerhalb einer einzelnen Meßstrecke entsprechend dem cut-off-Wert angibt.

Der E-Modul der biaxial gestreckten Polypropylenmonofolie beträgt in Längsrichtung 2200 bis 3000 N/mm² und in Querrichtung 4200 bis 5200 N/mm². Der spezifische Durchgangswiderstand bei 23 °C beträgt 1 x 10¹⁸ bis 1 x 10¹⁹Ω·cm.

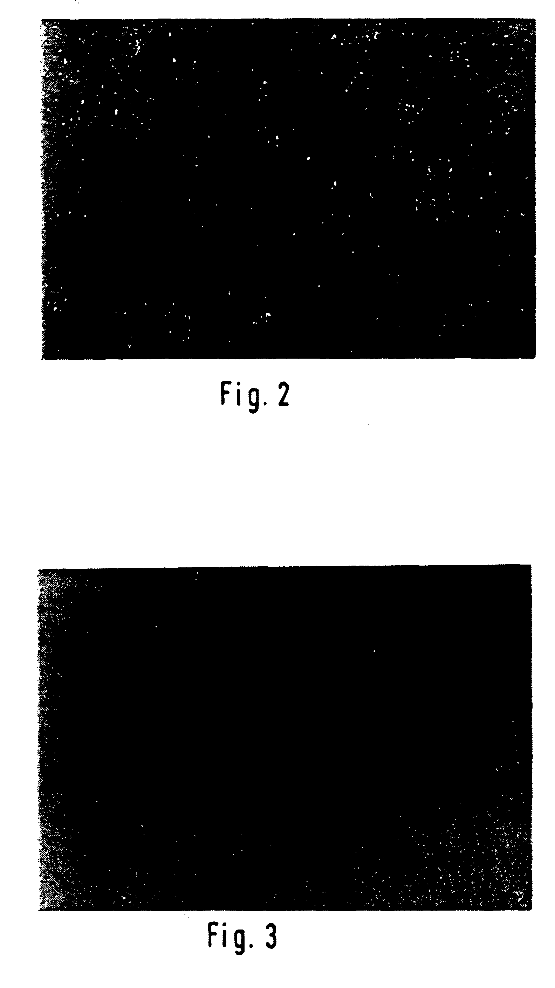

In Figur 2 ist eine Draufsicht auf eine Polypropylenmonofolie nach der Erfindung gezeigt. Bei der Herstellung dieser 8 µm dicken biaxial gestreckten Polypropylenmonofolie wird die Vorfolie vor der Längsstreckung auf eine Temperatur von 132 °C erwärmt und verweilt bei dieser Temperatur 6 Sekunden in der Vorheizzone. Die Temperatur der Eingangswalze der Streckzone beträgt 152°C. Die zu metallisierende, glattere Oberfläche der Polypropylenmonofolie zeigt weder Krater noch Fibrillen, so daß keine Störstellen für die Ausbildung einer gleichmäßigen Metallschicht durch Bedampfen vorhanden sind.

In Figur 3 ist vergleichsweise die glattere Oberfläche einer Polypropylenmonofolie dargestellt, bei der es sich gleichfalls um eine 8 µm dicke biaxial verstreckte Polypropylenmonofolie handelt. Jedoch wird im Unterschied zu dem Ausführungsbeispiel nach Figur 2 bei der Herstellung die Vorfolie für diese Polypropylenmonofolie vor der Längsstreckung in der Vorheizzone auf 145 °C bis 150 °C erwärmt. Bei dieser Temperatur verweilt die Vorfolie etwa 6 Sekunden in der Vorheizzone. Die Temperatur der Eingangswalze der Streckzone beträgt gleichfalls 152 °C wie im Ausführungsbeispiel nach Figur 2.

Wie der Zeichnung zu entnehmen ist, bilden sich in der glatteren Oberfläche dieser Polypropylenmonofolie Fibrillen und somit Fehlstellen nicht aus, welche als Quellen für Oxidationsvorgänge nach dem Metallisieren der glatteren Oberfläche der Folie dienen könnten. In bezug auf die sonstigen elektrischen und mechanischen Eigenschaften der Polypropylenmonofolien nach den Figuren 2 und 3 bestehen keine signifikanten Unterschiede.

Zur Verwendung als Kondensatorfolien werden die Folien auf der Seite mit der glatteren Oberfläche metallisiert, wobei als Metalle vorzugsweise Aluminium, Zink oder Mischungen beider Metalle verwendet werden. Die Metallschicht wird im allgemeinen durch Bedampfen auf die Folienoberseite aufgebracht und hat im allgemeinen eine Dicke von 20 bis 50 nm, wobei die Dicke der Metallschicht nach dem erwünschten Widerstand eingestellt wird, der in der Größenordnung von 1 bis 5 Ω/m² liegt. Aus den metallisierten Polypropylenmonofolien werden Kondensatoren von beispielsweise 15 µF gewickelt, die sich in einem Aluminiumbecher befinden und mit Harz vergossen werden. Die Dicke der Polypropylenmonofolie beträgt 8 µm und die Dicke der Metallschicht 25 nm. Die so hergestellten Kondensatoren werden im Hinblick auf ihre Gleich- und Wechselspannungsfestigkeit sowie auf ihren Kapazitätsverlust Δ C/C in Prozenten vermessen.

Der Kapazitätsverlust wird anhand von Kapazitätsmessungen bei 85 °C mit einer Kapazitätsmeßbrücke nach Schering mit einer Wechselspannung von 50 Hz gemessen. An die Kondensatoren wird während 2000 Stunden eine Wechselspannung von 500 V angelegt. Der danach ermittelte Kapazitätsverlust Δ C/C beträgt -5 %.

Die Gleich- und Wechselspannungsfestigkeiten sind jeweils Mittelwerte aus 21 sogenannten Kugelplattenmessungen, bei denen die zu messende Folie auf einer Platte als der einen Elektrode aufliegt und die zweite Elektrode eine an der anderen Seite der Folie anliegende Kugel ist. An diese beiden Elektroden wird eine Gleichspannung bzw. eine Wechselspannung angelegt. Ein elektrischer Durchschlag der 8 µm dicken Polypropylenmonofolie erfolgt bei der Messung der Gleichspannungsfestigkeit im Bereich zwischen 750 und 800 V/µm und bei der Messung der Wechselspannungsfestigkeit in einem Bereich von 450 bis 490 V/µm.

Zu der Polypropylenmonofolie nach der Erfindung ist noch anzumerken, daß sie im allgemeinen als Stabilisator ein sterisch gehindertes Phenol mit einem Gewichtsanteil von 0,1 bis 0,5 enthält. Ein derartiges sterisch gehindertes Phenol ist beispielsweise das auf dem Markt erhältliche Irganox 1010.

## Patentansprüche

1. Verfahren zur Herstellung einer biaxial gestreckten Polypropylenmonofolie (1) aus reinem Polypropylen, mit einem Aschegehalt < 50 ppm, bei der die Oberflächen (2,3) der beiden Seiten der Polypropylenmonofolie unterschiedliche Rauhtiefen aufweisen, **dadurch gekennzeichnet, daß** eine Vorfolie der Polypropylenmonofolie nach dem Extrudieren und Abkühlen eine Vorheizzone durchläuft, in der die Erwärmungstemperatur auf beiden Seiten der Folie unterhalb der Temperatur gehalten wird, bei der eine Umwandlung von β-Sphärolithen in α-Sphärolithen erfolgt, daß am Beginn einer Längsstreckzone die Eingangswalze der Längsstreckzone eine Temperatur von ≥ 150°C aufweist, so daß die Oberfläche der anliegenden Seite der Vorfolie auf eine Temperatur aufgeheizt wird, bei der die β-Sphärolithe aufgeschmolzen und in α-Sphärolithe umgewandelt werden, und daß in einer nachfolgenden Querstreckzone die Temperatur zwischen 150 °C und 165 °C beträgt.

2. Verfahren nach Anspruch 1, **dadurch gekennzeichnet, daß** die Temperatur in der Vorheizzone 125°C bis 141 °C beträgt.

3. Verfahren nach Anspruch 2, **dadurch gekennzeichnet, daß** die Verweilzeit der Vorfolie in der Vorheizzone zwischen 2 und 20 s liegt.

4. Biaxial gestreckte Polypropylenmonofolie (1) aus reinem Polypropylen mit einem Aschegehalt < 50 ppm, bei der die Oberflächen (2,3) der beiden Seiten der Polypropylenmonofolie unterschiedliche Rauhtiefen aufweisen, herstellbar nach dem Verfahren gemäß den Ansprüchen 1 bis 3, wobei die gemittelte Rauhtiefe R_{z} der glatteren Oberfläche (3), die fibrillenfrei und kraterlos ist, ≤ 0,25 µm ist, die gemittelte Rauhtiefe R_{z} der rauheren Oberfläche (2) mindestens 0,02 µm höher liegt und die Bestimmung der Rauhtiefen jeweils bei einem cut-off-Wert von 0,08 mm für die Rauhigkeitsmessung erfolgt.

5. Polypropylenmonofolie nach Anspruch 4, **dadurch gekennzeichnet, daß** der E-Modul der Polypropylenmonofolie (1) in Längsrichtung 2200 bis 3000 N/mm² und in Querrichtung 4200 bis 5200 N/mm² beträgt.

6. Polypropylenmonofolie nach Anspruch 4, **dadurch gekennzeichnet, daß** ihre Dicke im Bereich von 3,0 bis 20 µm liegt und daß als Stabilisator 0,1 bis 0,5 Gew.-% eines sterisch gehinderten Phenols der Polypropylenmonofolie (1) zugesetzt sind.

7. Polypropylenmonofolie nach Anspruch 4, **dadurch gekennzeichnet, daß** die glattere Oberfläche (3) mit einer Metallschicht, die eine Dicke von 20 bis 50 nm aufweist, metallisiert ist.

8. Polypropylenmonofolie nach den Ansprüche 4 bis 7, **dadurch gekennzeichnet, daß** sie eine Wechselspannungsfestigkeit von 450 bis 490 V/µm und eine Gleichspannungsfestigkeit von 750 bis 800 V/µm aufweist.

9. Polypropylenmonofolie nach Anspruch 8, **dadurch gekennzeichnet, daß** die Dicke der Polypropylenmonofolie (1) 8 µm und die Dicke der Metallschicht 25 nm betragen und daß der elektrische Widerstand der metallisierten Polypropylenmonofolie in der Größenordnung von 1 bis 5 Ω/m² liegt.

10. Verwendung der Polypropylenmonofolie nach den Ansprüchen 4 bis 9, nach Metallisierung als Elektroisolierfolie für die Herstellung von Kondensatoren.

11. Verwendung der Polypropylenmonofolie nach Anspruch 10 zum Wickeln von mit Harz vergossenen Kondensatoren, deren Kapazitätsverlust ΔC/C bei 85 °C, einer Wechselspannung von 500 V und einer Frequenz von 50 Hz nach 2000 Stunden höchstens -5 % beträgt.

## Claims

1. Process for producing a biaxially stretched polypropylene monofilm (1) of pure polypropylene, with an ash content of < 50 ppm, where the surfaces (2, 3) of the two sides of the polypropylene monofilm have different peak-to-valley heights, **characterized in that** following extrusion and chilling a prefilm of the polypropylene monofilm passes through a preheating zone in which the heating temperature is on both sides of the film kept below the temperature at which a transformation of β spherulites into α spherulites takes place, **in that** at the beginning of a longitudinal stretching zone the feed roll of the longitudinal stretching zone has a temperature of ≥ 150°C, that the surface of the prefilm in contact with the roll is heated to a temperature at which the β spherulites are melted and transformed into α spherulites and **in that** in a subsequent transverse stretching zone the temperature is between 150°C and 165°C.

2. Process as claimed in claim 1, **characterized in that** the temperature in the preheating zone is 125°C to 141°C.

3. Process as claimed in claim 2, **characterized in that** the residence time of the prefilm in the preheating zone is between 2 and 20 s.

4. Biaxially stretched propylene monofilm (1) of pure polypropylene with an ash content < 50 ppm, where the surfaces (2, 3) of the two sides of the polypropylene monofilm have different peak-to-valley heights, obtainable by the process of claims 1 to 3, where the mean peak-to-valley height R_{z} of the smoother surface (3) which is fibril free and craterless, is ≤ 0.25 µm and the mean peak-to-valley height R_{z} of the rougher surface (2) is at least 0.02 µm higher, the peak-to-valley heights each being measured with a cutoff value of 0.08 mm for the roughness measurement.

5. Polypropylene monofilm as claimed in claim 4, **characterized in that** the modulus of elasticity of the polypropylene monofilm (1) is from 2200 to 3000 N/mm² in the longitudinal direction and from 4200 to 5200 N/mm² in the transverse direction.

6. Polypropylene monofilm as claimed in claim 4, **characterized in that** its thickness is in the range from 3.0 to 20 µm and **in that** from 0.1 to 0.5% by weight of a sterically hindered phenol has been added to the polypropylene monofilm (1) as stabilizer.

7. Polypropylene monofilm as claimed in claim 4, **characterized in that** the smoother surface (3) has been metallized by means of a metal layer which has a thickness of from 20 to 50 nm.

8. Polypropylene monofilm as claimed in claims 4 to 7, **characterized in that** it has an a.c. voltage strength of from 450 to 490 V/µm and a d.c. voltage strength of from 750 to 800 V/µm.

9. Polypropylene monofilm as claimed in claim 8, **characterized in that** the thickness of the polypropylene monofilm (1) is 8 µm and the thickness of the metal layer is 25 nm and **in that** the electric resistance of the metallized polypropylene monofilm is in the order of from 1 to 5 Ω/m².

10. Use of the polypropylene monofilm as claimed in claims 4 to 9 following metallization as an electrical insulation film for the production of capacitors.

11. Use of the polypropylene mono film as claimed in claim 10 for capacitors encapsulated in resin, which have a drop in capacity ΔC/C, determined at 85°C an alternating voltage of 500 V and a frequency of 50Hz of at most -5% after 2000 hours

## Revendications

1. Procédé de fabrication d'un film monocouche de polypropylène étiré biaxialement (1) à partir de polypropylène pur, avec une teneur en cendres <50 ppm, dans lequel les surfaces (2, 3) des deux faces du film monocouche de polypropylène présentent des rugosités différentes, **caractérisé en ce que** l'on introduit un préfilm du film monocouche de polypropylène après l'extrusion et le refroidissement dans une zone de préchauffage dans laquelle la température de chauffe sur les deux faces du film est maintenue en dessous de la température à laquelle se produit une transformation de sphérolithes β en sphérolithes α, **en ce que**, au début d'une zone d'étirement longitudinal, le cylindre d'entrée de la zone d'étirement longitudinal présente une température de ≥160°C, de façon que la surface du préfilm adjacent soit chauffée à une température à laquelle on fond les sphérolithes β et on les transforme en sphérolithes α, et **en ce que**, dans une zone suivante d'étirement transversal, la température s'élève entre 150°C et 165°C.

2. Procédé selon la revendication 1, **caractérisé en ce que** la température dans la zone de préchauffage est comprise entre 125°C et 141°C.

3. Procédé selon la revendication 2, **caractérisé en ce que** le temps de séjour du préfilm dans la zone de préchauffage est compris entre 2 et 20 s.

4. Film monocouche de polypropylène étiré biaxialement (1) constitué de polypropylène pur avec une teneur en cendres <50 ppm, dans lequel les surfaces (2, 3) des deux faces du film monocouche de polypropylène présentent des rugosités différentes, qui peut être produit en suivant le procédé selon les revendications 1 à 3, dans lequel la rugosité moyenne R_{z} de la surface plus lisse (3), qui est exempte de fibrilles et sans cratère, est ≤0,25 µm, et la rugosité moyenne R_{z} de la surface plus rugueuse (2) est au minimum de 0,02 µm plus élevée, et on réalise la mesure des rugosités dans chaque cas à un seuil de coupure de 0,08 mm pour la mesure de rugosité.

5. Film monocouche de polypropylène selon la revendication 4, **caractérisé en ce que** le module E du film monocouche de polypropylène (1) est compris entre 2200 et 3000 N/mm² dans la direction longitudinale et entre 4200 et 5200 N/mm² dans la direction transversale.

6. Film monocouche de polypropylène selon la revendication 4, **caractérisé en ce que** son épaisseur se situe dans le domaine compris entre 3,0 et 20 µm et **en ce que** l'on ajoute au film monocouche de polypropylène (1) comme stabilisant 0,1 à 0,5% en poids d'un phénol stériquement encombré.

7. Film monocouche de polypropylène selon la revendication 4, **caractérisé en ce que** la surface plus lisse (3) est métallisée avec une couche métallique, qui a une épaisseur de 20 à 50 nm.

8. Film monocouche de polypropylène selon les revendications 4 à 7, **caractérisé en ce qu'**il présente une tenue en tension alternative de 450 à 490 V/µm et une tenue en tension continue de 750 à 800 V/µm.

9. Film monocouche de polypropylène selon la revendication 4, **caractérisé en ce que** l'épaisseur du film monocouche de polypropylène (1) est 8 µm, l'épaisseur de la couche métallique 25 nm et la résistance électrique du film monocouche de polypropylène est de l'ordre de grandeur de 1 à 5 Ω/m².

10. Utilisation du film monocouche de polypropylène selon les revendications 4 à 9, après métallisation, comme film isolant électriquement pour la fabrication de condensateurs.

11. Utilisation du film monocouche de polypropylène selon la revendication 10, dans le bobinage de condensateurs enrobés par coulage de résine, dont la perte de capacité ΔC/C à 85°C, à une tension alternative de 500 V et une fréquence de 50 Hz est au plus de -5% après 2000 heures.
